# EUROPÄISCHE PATENTANMELDUNG

(11) **EP 4 745 853 A1**
(43) Veröffentlichungstag der Anmeldung: **20.05.2026**
(21) Anmeldenummer: 24000135.4
(22) Anmeldetag: 18.11.2024
(51) Int. Cl.: G06Q 10/04, G06Q 10/08

(54) **KL-GESTÜTZTE SOFTWAREPLATTFORM ZUR REDUZIERUNG VON CO2-EMISSIONEN DURCH MINIMIERUNG VON LEERFAHRTEN IN DER LOGISTIK**

(71) Anmelder: Ulas, Hazar, 53179 Bonn (DE)
(72) Erfinder: Ulas, Hazar, 53179 Bonn (DE)

(57) **Zusammenfassung**

Die vorliegende Erfindung revolutioniert die Logistikbranche mit einer bahnbrechenden, Kl-gestützten Softwareplattform, die Leerfahrten um bis zu 80 % reduziert und dadurch CO₂-Emissionen drastisch senkt. Anders als bestehende Systeme geht diese Plattform weit über herkömmliche Optimierungslösungen hinaus: Sie kombiniert fortschrittliche Kl-Algorithmen mit dezentraler Automatisierung, um Transportkapazitäten **proaktiv** zu maximieren, Leerfahrten **intelligent vorherzusagen und zu vermeiden** sowie **in Echtzeit alternative Nutzungsmöglichkeiten für freie Ladekapazitäten** zu generieren.

Durch die einzigartige Verbindung von **vorausschauender KI, autonomer Disposition und CO₂-Zertifizierung** schafft diese Erfindung eine völlig neue Dimension der nachhaltigen Logistik. Erstmals arbeiten **selbstoptimierende Algorithmen in einem ganzheitlichen System** zusammen, das sich kontinuierlich weiterentwickelt und anpasst. Dieses intelligente Netzwerk transformiert den globalen Güterverkehr, indem es Effizienzsteigerung und Umweltschutz in nie dagewesener Weise vereint.

## Beschreibung

### Zusammenfassung der Erfindung:

Die vorliegende Erfindung betrifft eine Softwareplattform, die durch den Einsatz künstlicher Intelligenz eine signifikante Reduktion des CO₂-Ausstoßes im Logistiksektor durch gezielte Minimierung von Leerfahrten um bis zu 80 % ermöglicht. Die Plattform richtet sich an diverse Akteure des Logistikmarktes, darunter Kunden, Spediteure, Logistikdienstleister und LKW-Flottenbetreiber. Für jede dieser Gruppen bietet die Plattform spezifische, dedizierte Anwendungen, welche eine optimierte Bearbeitung ihrer jeweiligen Anforderungen sowie die umfassende Vernetzung innerhalb eines einheitlichen Systems ermöglichen.

Kern der Erfindung ist der gezielte und umfassende Einsatz künstlicher Intelligenz (Kl) zur Effizienzsteigerung und Optimierung logistischer Prozesse, welcher in verschiedenen funktionalen Modulen implementiert ist. Diese Module umfassen:
**1. KI-gestützte Kartierungslösung (Map):** Ein dynamisches, selbstlernendes Modul zur Routenoptimierung, das komplexe Datenmuster analysiert, um Leerfahrten zu reduzieren und die Transporteffizienz durch Berücksichtigung variabler Bedingungen zu maximieren.
**2. KI-basierter Chatbot:** Dieses Modul dient der automatisierten Kommunikation mit den Nutzern und steigert durch die Bereitstellung syntaktisch und semantisch optimierter Informationen sowie die Echtzeitverarbeitung von Anfragen die Effizienz der Kommunikation zwischen den Akteuren.
**3. Intelligente Frachtbörse:** Eine Komponente, die fortgeschrittene Kl-Algorithmen zur optimalen Auswahl und Vermittlung von Transportaufträgen einsetzt, um eine Maximierung der logistischen Auslastung auf Basis multipler Bewertungskriterien zu erreichen.
**4. KI-gestützter Kalkulator:** Ein virtuelles Dispositionsmodul, das datenbasierte Kalkulationen zur Optimierung der Entscheidungsfindung in der Logistik vornimmt und ressourceneffiziente Planungsprozesse ermöglicht.
**5. Vernetzungs- und Kommunikationsplattform:** Die Software integriert eine umfassende Chat- und Tracking-Lösung, die die Echtzeitkommunikation, Transparenz und Nachverfolgbarkeit logistischer Prozesse sicherstellt und alle beteiligten Akteure miteinander verbindet.

Die Plattform verfügt zudem über Schnittstellen zur Integration von Robotiktechnologien, die Automatisierungsprozesse in der Logistik weiter vorantreiben. Ein weiteres Kernmerkmal ist die Implementierung einer proprietären Kryptowährung, die zur Abwicklung von Zahlungen sowie zur Generierung und Umwandlung von CO₂-Zertifikaten dient, wobei die Wertsteigerung dieser Währung direkt mit den durch CO₂-Reduktionen erzielten Effizienzgewinnen verknüpft ist.

Die innovative Kombination aus Kl-Technologien, digitaler Vernetzung und dem Einsatz innovativer Finanzinstrumente macht die Software zu einer transformativen, nachhaltigen Lösung zur Effizienzsteigerung in der Logistikbranche und leistet einen erheblichen Beitrag zur Reduktion des globalen CO₂-Ausstoßes.

## Patentansprüche

1. **Eine KI-gestützte Softwareplattform zur Reduzierung von CO₂-Emissionen durch Minimierung von Leerfahrten im Logistiksektor,** umfassend:
a) eine dynamische, selbstlernende Kartierungslösung zur Routenoptimierung,
b) einen Kl-basierten Chatbot zur automatisierten und optimierten Kommunikation zwischen verschiedenen Akteuren,
c) eine intelligente Frachtbörse, die mithilfe von Kl-Algorithmen Transportaufträge optimiert und vermittelt,
d) einen Kl-gestützten Kalkulator zur datenbasierten Optimierung logistischer Entscheidungen,
e) eine Vernetzungs- und Kommunikationsplattform zur Echtzeitkommunikation, Transparenz und Nachverfolgbarkeit logistischer Prozesse,
f) Schnittstellen zur Integration von Robotiktechnologien und
g) ein proprietäres Zahlungssystem basierend auf einer Kryptowährung, die an CO₂-Reduktionen gekoppelt ist.
**Unteransprüche:**

2. **Anspruch,** wobei die Kartierungslösung dynamische Anpassungen auf Basis von Verkehrsdaten, Wetterbedingungen und anderen Variablen vornimmt, um eine effiziente Routenplanung zu ermöglichen.

3. **Anspruch,** wobei der Kl-basierte Chatbot syntaktische und semantische Analysen von Benutzeranfragen durchführt, um individuelle Transportlösungen in Echtzeit bereitzustellen.

4. **Anspruch** , wobei die intelligente Frachtbörse maschinelles Lernen verwendet, um Transportaufträge anhand von Faktoren wie Transportkapazität, Zeitrahmen und Umweltauswirkungen zu bewerten und zuzuweisen.

5. **Anspruch,** wobei der Kl-gestützte Kalkulator Simulationen für verschiedene Szenarien zur Optimierung logistischer Prozesse ausführt und potenzielle Ressourcen- und Kosteneinsparungen berechnet.

6. **Anspruch,** wobei die Vernetzungs- und Kommunikationsplattform eine Blockchain-basierte Technologie für die sichere Nachverfolgung und Dokumentation logistischer Transaktionen einsetzt.

7. **Anspruch,** wobei die Plattform eine Kryptowährung verwendet, die zur Verrechnung von Transportdienstleistungen und zur Generierung handelbarer CO₂-Zertifikate eingesetzt wird.
